# EUROPEAN PATENT APPLICATION

(11) **EP 2 963 568 A1**
(43) Date of publication of application: **06.01.2016**
(21) Application number: 15170105.9
(22) Date of filing: 26.03.2013
(51) Int. Cl.: G06F 17/30

(54) **DATA SELECTION AND IDENTIFICATION**

(30) Priority: 26.03.2012 US 201261615469 P
(62) Divisional of application: 13768304.1
(71) Applicant: Good Red Innovation Pty Ltd, Lauriston VIC 3444 (AU)
(72) Inventor: PRICE, Russell, Francis, Northcote Victoria 3070 (AU); SCOTT, Timothy, Lauriston Victoria 3444 (AU)
(74) Representative: Verriest, Philippe

(57) **Abstract**

A method of selecting source data as part of a process of source data extraction, the method being executed by one or more computer processors and including the steps of: selecting at least a first portion of the source data; and assigning a variable to the first portion of the source data to enable the first portion of the source data to be referred to and extracted using the variable by the one or more computer processors.

## Description

### Technical Field

This invention generally relates to methods for migrating source data to target data, including, for example, validating source data, for example as part of a data migration from a source application to a target application.

### Background

Businesses wishing to upgrade their computer software generally replace a source application with a new application. This generally involves having data previously created, managed and/or controlled by the legacy (or source) application, managed and/or controlled by the new, or target application. However, the internal data structures of the data stores used by the source application and the target application are typically not interchangeable, so a data migration from the source application data store to the target application data store is generally undertaken. The data migration typically involves the Extraction, Transformation and Loading (or "ETL") of data from the source application data store into the target application data store. This process is sometimes referred to as copying data from the source application into the target, or new, application. For small data volumes, it can be cost effective to employ people to manually copy data from the source application into the new application. However, for larger data volumes, an automated or semi-automated data migration approach is typically employed.

The migration of data from a source application data store to a new application data store represents a substantial undertaking for a business. Such migrations typically involve many people, run for many months, and operate in two distinct phases: the first is the build and test phase where the data migration software is created and proven; the second is the actual execution of the data migration software (also known as the "Go Live" phase) which prepares the new application for production use by populating the new application data store with data from the source application data store. The "Go Live" phase can be performed as a single event or implemented over an extended period. For example, an insurance company could migrate its entire portfolio from its source application into its new application in a single migration run, or it could run weekly migrations over the course of a year, selecting policies as they fall due for renewal.

The build and test phase can involve multiple test executions of the data migration software to ensure that a sufficient amount of the data in the source application data store is migrated to the new application data store, and that the migrated data is accurate and consistent with the legacy data. This often involves a time-consuming, iterative process wherein the migration software is modified between multiple test executions to improve the accuracy and completeness of the migration, until the migration software is sufficiently accurate and complete to be used in the "Go Live" phase.

It is desired to facilitate the migration of data in a source application to a new or target application, address or ameliorate one or more disadvantages or drawbacks of the prior art, or at least provide a useful alternative.

### Summary

In at least one embodiment, the present invention provides a method of selecting source data as part of a process of source data extraction, the method being executed by one or more computer processors and including the steps of:
selecting at least a first portion of the source data; and
assigning a variable to the first portion of the source data to enable the first portion of the source data to be referred to and extracted using the variable by the one or more computer processors.

Embodiments of the present invention also provide a method of selecting source data compatible with a source application for use in a data migration generating target data compatible with a target application, the method being executed by one or more computer processors and including the steps of:
selecting at least a first portion of the source data; and
assigning a variable to the first portion of the source data to enable the first portion of the source data to be referred to using the variable by the one or more computer processors in generating the target data.

Embodiments of the present invention also provide a method of generating target data compatible with a target application from source data compatible with a source application as part of a migration from a source application to a target application, the method being executed by one or more computer processors and including the steps of:
selecting at least a first portion of the source data; and
assigning a variable to the first portion of the source data to enable the first portion of the source data to be referred to using the variable by the one or more computer processors in a subsequent generation of further target data from the source data.

Embodiments of the present invention also provide a method of generating comparison result data, the method being executed by one or more computer processors and including the steps of:
receiving a source data entry within a source data store, the source data entry being associated with a source value;
receiving a first target data entry generated from the source data entry, the first target data entry being associated with a first target value;
receiving a second target data entry generated from the source data entry, the second target data entry being associated with a second target value;
comparing the first target value and second target value to generate comparison result data.

In at least some embodiments, the present invention also provides a system for generating target data compatible with a target computing software application from source data compatible with a source computing application as part of a migration from a source computing application to a target computing application, the system comprising:
a source data store storing the source data;
one or more computer processors which:
   select at least a first portion of the source data stored in the source data store; and
   assign a variable to the first portion of the source data to enable the first portion of the source data to be referred to using the variable by the one or more computer processors in a subsequent generation of further target data from the source data.

### Brief Description Of The Drawings

Some embodiments of the present invention are hereinafter described, by way of example only, with reference to the accompanying drawings, wherein:
Figure 1 is an architectural diagram of a data scoping and migration system in accordance with an embodiment of the present invention.
Figure 2 is a relationship diagram illustrating key entity relationships which may define a Data Scope Template.
Figure 3 is a table consisting of exemplary instances of Data Scope Templates.
Figure 4 is an illustration of a hierarchy of variables.
Figure 5 is an exemplary XML structure of an unresolved hierarchical Data Scope Template.
Figure 6 is an exemplary XML structure of a resolved hierarchical Data Scope Template.
Figures 7 and 7a are first and second portions, respectively, of an exemplary XML structure of a resolved Data Scope Template including results which consist of Target Data Keys (identifying target data entries), Comparison Data and failure data
Figure 8 is a flow diagram illustrating an exemplary process for constructing a Data Scope Template using definition data, characteristic data, and hierarchies of sub-variables.
Figure 9 is a diagram illustrating an exemplary process for Source Data Key resolution and data migration, including generation of a list of source entries, failure data, source values and target values.
Figure 10 is an exemplary failure data and comparison report illustrating the use of Comparison Data in failure data reporting.
Figure 11 is an exemplary financial reconciliation report illustrating the use of Comparison Data in financial reconciliation.
Figure 12 is a schematic diagram of Comparison Data.
Figure 13 is an exemplary architecture diagram illustrating the architecture of a computer system or processor suitable for use with embodiments of the present invention.

### Detailed Description

### Overview

As described above, data migration processes generally involve an ETL process. When testing a data migration process, a portion or subset of data is selected from a source data base for migration, and subsequently extracted. The portion or subset of data selected from the source database may be all of the contents of the database, or all of a defined part of the contents of the database. In some embodiments of the present invention, the extracted data may be validated, to ensure that it does not contain irregular data (for example, a phone number in an area code field). The validated data is then migrated.

Embodiments of the present invention provide a method for selecting a set of source entries representing a portion of the source data, for subsequent extraction, and possibly validation and/or migration to target data (which may be data compatible with a target application, or data in an intermediate form). In this regard, the data migration may be the complete migration from data compatible with a source application to data suitable for use with the target application, or may be one of the migration steps within the complete migration process (for example, the migration of source data to an intermediate form, migration of data from an intermediate form to a form usable by the target application, or migration of data between two intermediate forms).

When testing such migrations, it would be useful to specify a set of source entries representing a portion of the source data, as this would enable the testing of the migration software to focus on the behaviour of specific types of source data and migration, extraction or validation logic.

For example, when migrating insurance data, if a developer had been allocated the specific task of migrating motor vehicle insurance policies, then the developer may wish to select only policies from the portion of insurance policies that relate to motor vehicles. Migrating policies outside of this portion would distract the developer, extend the duration of the migration process and waste computer resources.

As another example, when migrating "live" production data, for example, when migrating from one system to another, the requirement may be to migrate all, or only a portion of, the available source data. If it were possible to simply and easily specify portions of source data to which the migration would be applied, the data could be divided into portions to be migrated in parallel, thus shortening the duration of the overall migration process. Source data could also be divided into data migration phases, such as a "pilot" phase followed by the balance of the data. In the insurance industry, policies could be migrated in weekly phases as they fall due for renewal. Embodiments of the present invention facilitate source data selection by providing a flexible, extendable and reusable scoping mechanism. ("Scoping" involves identifying the portions of source data to be used in a process, in this case, an extraction and/or migration process.)

A Software Toolset in accordance with one embodiment of the invention provides the ability to scope the data that is to be manipulated during the migration process.

Where data is to be extracted from a source database, embodiments of the present invention provide for a computer-implemented method of selecting the source data, the method including the steps of selecting at least a portion of the source data, and assigning to this identified portion a variable. The portion of source data to be extracted may be referred to using the variable, so that subsequent steps in the extraction process (including any subsequent validation or migration processes) can use the variable to refer to the portion of source data.

Similarly, where a portion of source data (being data accessible to and compatible with a source application) is to be used in a data migration process (where that data migration process generates target data, being data compatible with and accessible to a target application), that portion of source data may be selected and assigned a variable. This variable may be subsequently used in the data migration process to generate target data. Where multiple migration runs are executed (for example, during the "build" phase, to ensure that the migration logic is effective), the variable may be used in the subsequent migration runs (that is, in subsequent generation of further target data from the source data).

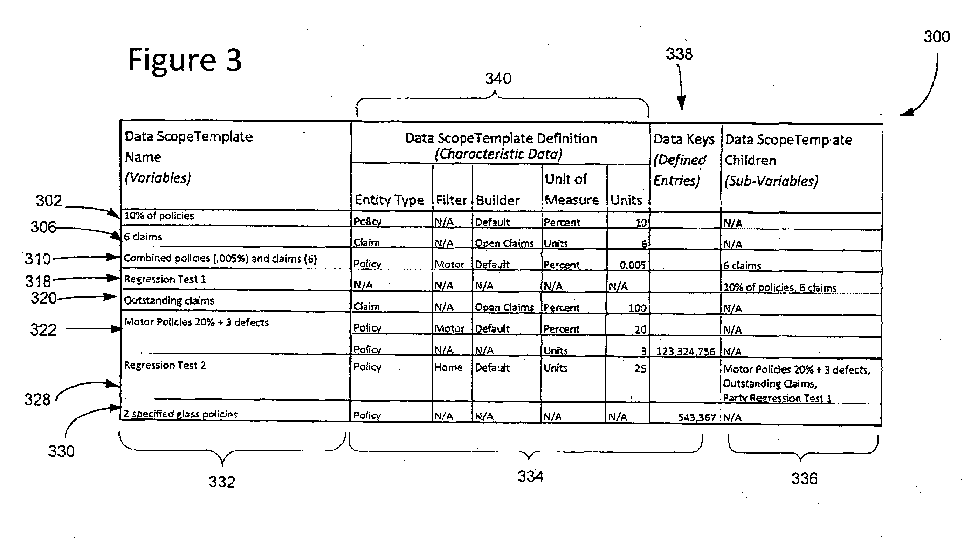

The variable may be assigned to the portion of the source data by means of a Data Scope Template. As further explained below with reference to Figure 3, the Data Scope Template 332 may assign a variable (such as a "name") to data identifying the portion of the source data. (Each row in Figure 3, apart from the header row, is a separate data scope template.) The part of the Data Scope Template that identifies the portion of the source data is called a Data Scope Definition 334. A Data Scope Template can contain multiple Data Scope Definitions and can (alternatively or additionally) consist of one or more hierarchies of variables 336.

Identification of the portion of source data to be assigned to a variable may involve receiving identifying data that identifies the portion. This identifying data is generally derived from operator input or configuration files. The identifying data may be stored in a Data Scope Template after it has been received. As indicated above, such information within a Data Scope Template 332 is called a Data Scope Definition 334. A Data Scope Template may include a configurable mix of Data Scope Definitions 334. A first type of Data Scope Definition consists of definition data 338 defining data entries within a Source Data Store (for example, specific data keys in a database, such as policy numbers in a database of insurance policies). A second type of Data Scope Definition is an interpretable definition, which consists of characteristic data 340 defining data characteristics, wherein the characteristic data 340 is used to identify by description data entries within a Source Data Store. The characteristic data is interpreted to enable identification of specific data entries. For example, characteristic data may define "10 % of motor vehicle policies" or "all policies due to expire next month".

If an interpretable definition (that is, a definition including characteristic data) is used, the characteristic data is resolved into a specific set of data entries within the Source Data Store. This resolution of characteristic data to specific data entries need only be done once. A Data Scope Template having characteristic data may be modified to store or refer to the resolved data entries, so that if the Data Scope Template is subsequently reused (for example in a subsequent data migration), the resolved data entries may be used instead of the characteristic data. A resolved Data Scope Template will therefore generally use only definition data whenused as part of a migration process , all of the characteristic data having been previously resolved.

One use of a Data Scope Template is to facilitate regression testing of the data migration software or logic. Regression testing of the data migration may be achieved by comparing the results of repeated use of a Data Scope Template in altered migration processes.

Data migration processes transform source values to generate interim and target values. The complete migration involves a sequence of data transformations, and each transformation generates an interim value, the final transformation generating a target value. For each source value to be transformed, embodiments of the present invention provide a method of recording value(s) that have been generated in the target system(s) that correspond to the source value (including interim values stored temporarily during the migration process in an intermediate form). Furthermore, embodiments of the present invention provide a method of comparing the source, interim and target values. For example, if "premium" is nominated as a value in an insurance data migration, then target premium values can be reconciled to source premium values for each policy. This facilitates auditing of the migration process. Where there is a variance, interim values can be checked to see where in the migration process the failure occurred, aiding reconciliation and debugging (rectification) of the data migration software or logic.

The following description primarily employs examples from the insurance industry for ease of explanation and understanding of the invention. However, embodiments of the invention may be used in the context of data migration in any industry; insurance data migration is just one of these.

### Definitions

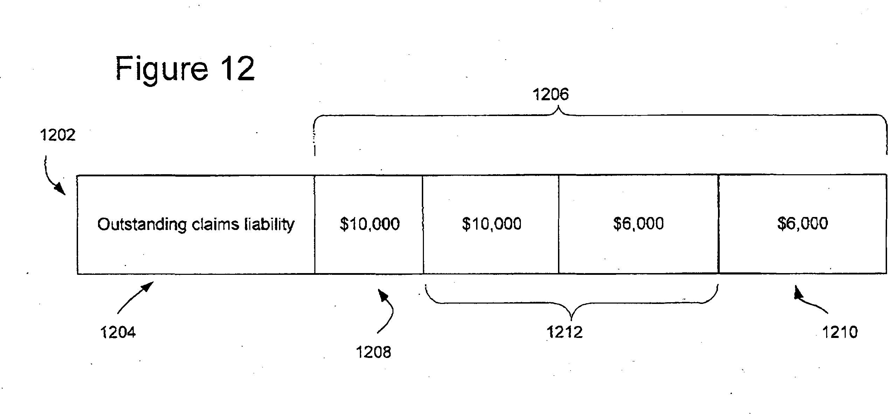

The following terminology is used in this description:
**Comparison Data** is a collective expression for associated Comparison Values and their corresponding Comparison Name(s). (See item 1202 of Figure 12.)
**Comparison Name** (see item 1204 of Figure 12) refers to a label corresponding to one or more associated Comparison Values, and is recorded with its corresponding Comparison Values 1206 in a Data Scope Template Execution Results file. A Comparison Name may at least partially denote or describe its corresponding Comparison Values. Examples of Comparison Names, in an exemplary insurance data migration context, include "premium income", "outstanding claims liability" or "claim payment", each of which corresponds to one or more Comparison Values.
**Comparison Result Data** refers to data representing the results of comparing associated Comparison Values (being Comparison Values associated with a common Comparison Name). In the example described in the 'Comparison Value' definition below, the Comparison Result Data for Comparison Name "outstanding claims liability" is generated by comparing source Comparison Value of $10,000 (see item 1208 of Figure 12) to target Comparison Value of $6,000 (see item 1210 of Figure 12). The Comparison Result Data value is, therefore, $4,000. In another example, a Comparison Name may be "start date", the source Comparison Value being "20-Nov-2011" and the target Comparison Value being "22-Nov-2011". The Comparison Result may be a boolean value indicating whether the source Comparison Value is the same as the target Comparison Value. Alternatively, or in addition, the Comparison Result may be the difference between the source Comparison Value and the target Comparison Value (e.g. 2 days).

Where a first migration process results in a first target Comparison Value (first target value), and a second migration process results in a second target Comparison Value (second target value), Comparison Result Data may be generated by comparing the first target value with the second target value.

**Comparison Value** refers to an attribute of a data entry (see items 1206 of Figure 12). The data entry may be a data entry in a Source Data Store (1208) or a Target Data Store (1210). The data entry may also be an entry temporarily created during an extraction or migration process. Multiple Comparison Values may be associated with each other where they are derived from a common attribute of a common Source Data Store entry. For example, during one or more steps of one or more executions of a migration process, interim or temporary data entries may be generated from a common Source Data Store entry (to facilitate auditing or testing of the migration process). If the migration process is successful, a Target Data Store entry will be generated. Each of the temporary data entries and the Target Data Store entries may have attributes in common with the Source Data Store entry from which they have been generated, and these attributes are considered "associated", and correspond with a single, common Comparison Name (see, for example, item 1202 of Figure 12).

An associated set of Comparison Values 1206 will always include at least a source value 1208, and will also have target value(s) 1210 where the migration was successful. A first migration may result in a first target value, and a second migration may result in a second target value, both of which are examples of Comparison Values. As described above, an associated set of Comparison Values may also include interim target values 1212 representing various stages of the migration process. The Comparison Values 1206 for a Comparison Name 1204 (for example, outstanding claims liability) are useful in determining where an error was introduced in the data migration process. For example, the Source Data Store entry 1208 may have an attribute denoting an outstanding claims liability, corresponding to the Comparison Name "outstanding claims liability". The Comparison Value in the Source Data Store for this Comparison Name may be $10,000. If the associated Comparison Value 1210 in the Target Data Store (also associated with the Comparison Name "outstanding claims liability") is $6,000 (ie. a variance of $4,000), the interim Comparison Values 1212 associated with the "outstanding claims liability" Comparison Name can be reviewed to see where in the migration process the error (variance) was introduced. Comparison Values may be persistently stored, facilitating the comparison of the results of two executions of the data migration process (which may be used to generate Comparison Result Data).

**Data Scope Characteristic** refers to characteristic data which defines data characteristics, and is used to identify data entries within a Source Data Store. It can take the form of a data attribute of a Data Scope Template. It is interpreted and resolved to Source Data Keys the first time that the Data Scope Template is used during an extraction or migration process. An example of characteristic data in the context of a general insurance migration is "10% of policies"; another example is "200 claims".

**Data Scope Definition** (see item 340 of Figure 3) is the collective expression for Source Data Keys (definition data) (see item 338 of Figure 3) and Data Scope Characteristics (characteristic data) (see item 340 of Figure 3). In the present embodiment, Data Scope Definitions nearly always form part of a Data Scope Template.

**Variable Hierarchy** is an ordered set of variables linked in parent to child relationships. A child can have an unlimited number of siblings within any hierarchy and an unlimited number of generations of ancestors within any hierarchy. A child may participate in multiple different hierarchies. A variable hierarchy may be implemented using a hierarchy of Data Scope Templates. Child variables may be referred to as sub-variables, and grandchild variables may be referred to as further sub-variables.

**Data Scope Template** is a computer-readable document, (see also the rows of Figure 3) which may be an empty structure or contain one or more Data Scope Definitions, which define data to be assigned to a variable. It may also (or alternatively) contain or refer to other variables, and may contain or refer to a hierarchy of variables. As further described below, a Data Scope Template generally assigns a variable to data defined by Data Scope Definitions referred to in the Data Scope Template. It may (alternatively or in addition) assign the variable to data defined, wholly or in part, by one or more sub-variables, or a hierarchy of sub-variables including further sub-variables.

**Migration** is the movement of data between a Source Data Store and a Target Data Store, including any transformation required to modify the data for storage in the Target Data Store(s) and make it compatible with the target application.

**Source Data Key** refers to definition data which defines data entries within a Source Data Store. It is generally a unique identifier. In an exemplary insurance context, a data entry defined by a Source Data Key may be an insurance policy number or claim number.

**Source Data Store** refers to one or more repositories storing data in the configuration and structure used by a source application and can include, for example, databases, data warehouses and other data stores, including data stores accessible through WebService application programming interfaces (APIs).

**Target Data Key** refers to a unique identifier which defines a data entry within a Target Data Store.

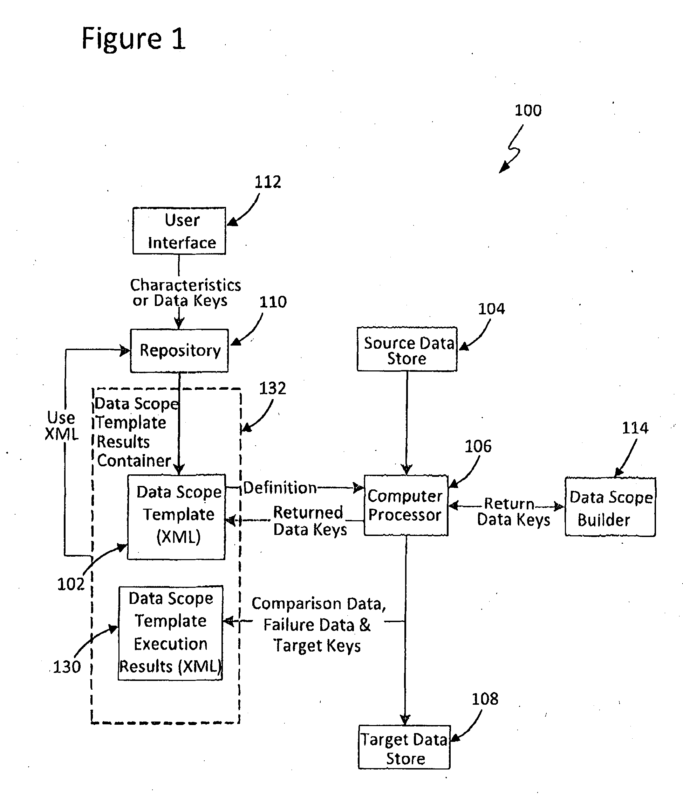

**Target Data Store** refers to one or more repositories storing data in the configuration and structure used by the new (or target) application and can include, for example, databases, data warehouses and other data stores, including data stores accessible through WebService APIs. The Target Data Store may store target data, where the target data is the result of the complete migration process. Where target data is intermediate (and therefore not in its final form), it may be stored in another storage location or device. Figure 1 illustrates a data scoping and migration system 100. Migration system 100 generally includes Source Data Store 104, computer processor 106 and Target Data Store 108. Computer processor 106 may consist of one or more physical computer processors, which may be physically and/or geographically distributed, or may be affixed to a common logic board. It is a logical computer processor, which may consist of multiple processes or threads executing on any number of physical processors.

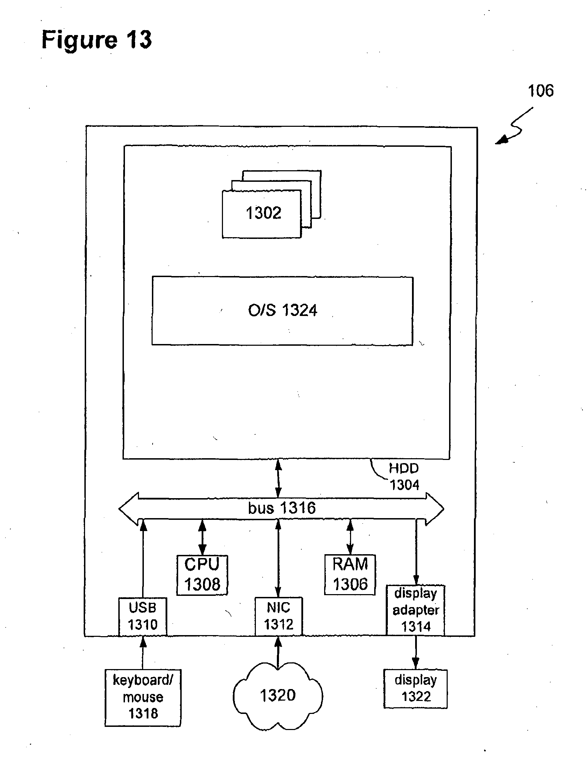

In the described embodiment, the computer processor 106 is a standard computer system such as an 32-bit or 64-bit Intel Architecture based computer system, as shown in Figure 13, and the methods executed by the processor 106 and described further below are implemented in the form of programming instructions of one or more software modules 1302 stored on non-volatile (e.g., hard disk) storage 1304 associated with the computer system, as shown in Figure 13. However, it will be apparent that at least parts of the processes described below could alternatively be implemented as one or more dedicated hardware components, such as application-specific integrated circuits (ASICs) and/or field programmable gate arrays (FPGAs).

The system 106 includes standard computer components, including random access memory (RAM) 1306, at least one processor 1308, and external interfaces 1310, 1312, 1314, all interconnected by a bus 1316. The external interfaces could include universal serial bus (USB) interfaces 1310, at least one of which is connected to a keyboard and a pointing device such as a mouse 1318, a network interface connector (NIC) 1312 which could connect the system 106 to a communications network such as the Internet 1320, and a display adapter 1314, which is connected to a display device such as an LCD panel display 1322.

The system 106 also includes a number of standard software modules, including an operating system 1324 such as Linux or Microsoft Windows.

Source Data Store 104 and Target Data Store 108 may contain data in any form of electronic storage. A database is a common type of repository. Interaction with a data repository (such as Source Data Store 104 and Target Data Store 108) can be via Structured Query Language (SQL), any other form of Application Programming Interface (API), or any combination thereof.

### Data Scope Templates - characteristic data and definition data

As described above, Data Scope Template 102 specifies at least a portion of the source data in Source Data Store 104 to be extracted or migrated (or from which target data, be that data in an intermediate or final form, may be generated). It preferably takes the form of a computer readable document. The selection of at least a portion of the source data from which target data is to be generated (referred to in the art as "data scoping") may be achieved through definition data, which represents one or more fixed definitions containing specific sets of Source Data Keys, characteristic data (Data Scope Characteristics which are interpreted (i.e resolved) during an extraction or migration process by the computer processor 106 to identify Source Data Keys, if they have not been previously interpreted), a hierarchical collection of variables, sub-variables and/or further sub-variables, or any combination of these.

Data Scope Templates 102, including characteristic data such as Data Scope Characteristics, definition data such as Source Data Keys, and one or more variables, including Variable Hierarchies (which could include sub-variables and further sub-variables) can be maintained via user interface 112.

The characteristic data and definition data of a Data Scope Template 102 are stored in repository 110. Repository 110 may also store Data Scope Template 102, possibly in a relational table and/or extensible Markup Language (XML) form.

Upon execution of an extraction or data migration process, computer processor 106 retrieves Data Scope Template 102 from repository 110.

### Resolution of characteristic data

On the first processing of Data Scope Template 102 by computer processor 106, any characteristic data of the Data Scope Template 102 (and any characteristic data referred to by the Data Scope Template 102, for example through child Data Scope Templates), is resolved by computer processor 106 into definition data, which takes the form of a specific set of Source Data Keys. In other words, the computer processor 106 uses the characteristic data to identify the specific data entries within the Source Data Store 104 that are to be extracted or migrated. This is achieved by passing the characteristic data to data scope builder process 114. Data scope builder process 114 returns the definition data determined from the characteristic data (the definition data taking the form of Source Data Keys) to computer processor 106, which in turn writes the Source Data Keys into the Data Scope Template 102 and includes them in a "run time data scope key list". The run time data scope key list is a temporary list maintained by computer processor 106 that identifies all of the Source Data Keys that will be used in an extraction or migration process. In one embodiment, the data scope builder process 114 may write the definition data directly into the Data Scope Template 102.

### Generating and storing failure and Comparison Data

The specific Source Data Keys in the run time data scope key list are used by computer processor 106 to scope the data for migration or extraction (that is, select the portion of the source data to be extracted or migrated). As part of the data migration or extraction process, a Data Scope Template Results Container 132 is constructed. It includes the Data Scope Template 102 and may also include Data Scope Template Execution Results 130. The Data Scope Template Execution Results 130 may contain Target Data Keys, failure data and Comparison Data (representing Comparison Values associated with a Comparison Name at various stages of the migration process) associated with each Source Data Key in the Data Scope Template 102. Successfully generated target data is stored in one or more Target Data Stores 108. For example, the target data may be simultaneously stored in a Target Data Store associated with a data warehouse, and a Target Data Store associated with an application for processing insurance policies.

At the conclusion of the data migration or extraction process, Data Scope Template Results Container 132, consisting of Data Scope Template 102 (which includes any newly resolved Source Data Keys), and Data Scope Template Execution Results 130 (which includes Comparison Data, failure data and Target Data Keys representing target data entries), is stored in repository 110.

### De-duplication of Source Data Keys

A specific Source Data Key representing a source entry may be referenced by multiple Data Scope Definitions within the same Data Scope Template 102, or by any combination of Data Scope Templates 102 within a Variable Hierarchy. In this circumstance, the specific Source Data Key is only processed once for the data migration or extraction (that is, target data is generated from the source data represented by the Source Data Key only once). This is facilitated by the generation of a run time data scope key list, which contains the Source Data Keys representing the source data to be processed. The run time data scope key list is a set of source entries (Source Data Keys), where each source entry corresponds to a data entry within the source data store, and is associated with one or more variables, sub-variables or further sub-variables. The run time data scope key list is processed so as to remove any duplicates. Any Comparison Data, failure data and Target Data Keys stored in Repository 110 are associated with each Data Scope Template 102 which refers to the corresponding Source Data Key. In other words, where an extraction or migration is successful, the system of the described embodiment receives one or more respective target data entries generated from corresponding source data entries through the extraction or migration process, and associates each of the respective target data entries with the variables, sub-variables or further sub-variables associated with the corresponding source data entry. In addition, any failure data generated as a result of an unsuccessful extraction, validation or migration of source data entries is also associated with the variables, sub-variables or further sub-variables associated with the corresponding source data entries. Amongst other things, this allows each use of a Data Scope Template 102 to be compared against prior uses (e.g. executions of the migration process).

For example, assume that insurance policies relating to motor vehicles is selected, and assigned the variable "Car insurance". There are 10 relevant policies, each of which has a corresponding key (Source Data Key) which identifies it.. Discounted insurance policies are also selected, and are assigned the variable "Discounted". There are 10 discounted policies, 2 of which are also motor vehicle policies. A run time data scope key list is generated, and contains 18 Source Data Keys (each of which is associated with one or more variables, sub-variables or further sub-variables). Two of those Source Data Keys (relating to discounted motor vehicle insurance) are assigned to both the "Car insurance" variable and the "Discounted" variable.

For each of the 18 Source Data Keys, data validation, extraction or migration will either succeed or fail. Where data migration succeeds, target data is generated, and each Target Data Key is associated with the variable or variables related to the corresponding Source Data Key. So Target Data Keys generated from Source Data Keys relating to motor vehicle insurance will also be assigned the variable "Car insurance". Similarly, where data extraction, validation or migration fails, failure data is generated, and the failure data is associated with the variable relating to the corresponding Source Data Key. If only 50% of the Source Data Keys assigned the "Car insurance" variable are successfully extracted, validated or migrated, then 5 of the Source Data Keys will have associated Target Data Keys, and the remaining 5 Source Data Keys will have associated failure data. The "Car insurance" variable will have a 50% success rate.

If one of the "Car insurance" Source Data Keys which is associated with failure data is also assigned to the "Discounted" variable, it is not attempted to be re-extracted, re-migrated or re-validated, but the failure data counts against (is assigned to) both the "Car insurance" and "Discounted" variables.

If the Data Scope Template 102 is subsequently reused (in a subsequent migration process or test process), the Source Data Keys stored in Repository 110 are used, avoiding the need for any interpretable definitions (characteristic data) to be re-evaluated.

System 100 is intended for use by business analysts, developers and testers of data migrations, as well as the support staff that execute "Go Live" data migrations resulting in target applications being populated with data for production use by business.

The design is not bound to any specific industry. However, it is well suited to the needs of complex financial applications such as those used by the general insurance (or "property and casualty") industry.

### Benefits of Data Scoping using variables

The advantages of using variables are realised during the development phase of a migration project as well as during the production "live" migration. The advantages are as follows.
1. The ability to select a portion of data (rather than all of the source data) means that the migration process executes more quickly, allowing more test migrations to be executed to prove the reliability and/or accuracy of the process. It also reduces the amount of computer resources required during the development phase of a project.
2. The ability to define a set of persistent Source Data Keys (definition data) within a Data Scope Template means that re-executing the migration process that uses that Data Scope Template is efficient (as the source data does not need to be re-selected) and accurate (as the same Source Data Keys are always selected).
3. During the development phase of a migration process it is common that a target system has to be modified to support the source system data and that these modifications are delivered incrementally. For example, in an insurance data migration, the target system may support motor vehicle policies some months before it supports home and contents policies. Without an effective data scoping mechanism, developers and testers have to filter test results to remove failure data which is due to the target system not supporting the particular source data. Such failure data can be distracting and may not be readily differentiable. The ability to limit the migration process to portions of the source data which are supported by the target system (and progressively increase the scope of source data as the target system support is increased), significantly aids the development and testing process.
4. Hierarchical Variables and Data Scope Templates greatly aid regression testing. For example, they allow a project manager to insist that developers always include regression test variables or Data Scope Templates when testing new software, and do not promote the software from their development environments to the system test environment until the regression test has been passed. From the developers' perspective, this is simply a matter of adding the regression test suite variable Data Scope Template as a sub-variable or child of the Data Scope Template that he or she has built to unit test his or her new program code.
5. Using a data scope builder 114 to resolve data sets (rather than having migration programmers build it into the migration process) results in resolution algorithms that are encapsulated, well tested and consistent. The algorithms are more easily maintained as they are in one place. This encapsulation allows specialists, who understand the intricacies of the source system, to be used to correctly interpret the characteristic data provided for resolution.
6. The conventional method of identifying test data involves business analysts identifying scenarios and asking data migration developers to provide data that meet these criteria. This involves a risk of misinterpretation. The ability for business analysts and testers to provide their own Source Data Keys (definition data) for inclusion in Data Scope Templates reduces this risk of misinterpretation and allows the business to identify known problem data. In the insurance industry, it means that a Data Scope Template may be constructed from policies that data processing staff have identified as having problems or being complex. This enables greater involvement by processing staff and management. It also reduces reliance on developers, aiding productivity and reducing cost.
7. Several months prior to the conclusion of the development phase of a migration project, a "code freeze" is usually implemented, whereby program code cannot be altered. If data scoping logic were integrated into the validation, extraction or migration logic, it too would be frozen, and no new scenarios could be introduced to further test the migration process. By using definition data and characteristic data, new tests can be created throughout the freeze period without changing program code.
8. The production of objective testing evidence (in the form of failure data, Comparison Data (representing Comparison Values associated with a Comparison Name at various stages of the migration process) and Target Data Keys (representing target data entries)), allows the project manager to monitor the testing efforts of members of the project team. For example, the project manager can see whether a developer ran and passed the regression test suite prior to submitting his migration logic changes for promotion to the system test environment.
9. The execution of a migration task may not be trivial, especially if there are constraints on the available computer resources (e.g. computer processors). The migration process can take several days to execute and can involve complex set up and monitoring steps requiring specialist input. The ability to have a multi-level hierarchy of variables or Data Scope Templates extends the benefits of parent to child Data Scope Templates and Variable Hierarchies. It enables test cases to be designed and assembled in component form and executed in a single migration run. This allows for the interests of several audiences (eg. developers, system testers, acceptance testers and project managers) to be addressed in a single migration run. The accurate scoping and reuse of hierarchies proven in earlier migration runs, and logging of failure data and Comparison Data reduces the opportunity for human error to invalidate a migration run.
10. The production run of a migration process is expected to be "clean", having few, if any, source data entries that, when attempted to be extracted, validated or migrated, will result in failure data. When performance testing, it is useful to test with clean data samples so that all data entries successfully pass through the entire extraction, validation and/or migration process, accurately simulating the production run. Creating "clean" variables or Data Scope Templates supports realistic performance testing.
11. The design of test scenarios (represented by selected portions of source data, ie Data Scope Templates) that thoroughly test migration logic can be a complex and time consuming activity. The ability to add existing variables or Data Scope Templates as children of other variables or Data Scope Templates allows the reuse of existing scenarios.
12. The automated resolution of Data Scope Characteristics (i.e. characteristic data) to specified data entries (i.e. Source Data Keys or data entries within the Source Data Store) provides an efficient method of constructing test cases that accurately represent defined scenarios.
13. Associating each Target Data Key with a Data Scope Template (represented by a variable) and its corresponding source entry aids reconciliation as there is a clear link between source data and target data entries. The link to variables (and their descendants) aids analysis by category of the results of a migration run including analysis by Data Scope Characteristic (eg. by entity type or product type), and assessment of the success of regression testing and quality of newly introduced functionality in the target application.
14. Generating failure data and Comparison Data (representing Comparison Values associated with a Comparison Name at various stages of the migration process), and associating it with a variable provides the ability to analyse why particular source data entries did not extract, validate or migrate, showing how and where the extraction, validation or migration process broke down. This allows developers to assess what changes are required to the extraction, validation or migration logic to address the issue, alter the logic and rerun the extraction, validation or migration process. Comparing the results (in the form of failure data and Comparison Result Data) of the same Data Scope Template(s) executed at different points in time (with modified logic) enables regression testing and trend analysis. Although this regression testing and trend analysis can be undertaken manually, one advantage of embodiments of the present invention is the facilitation of automated regression testing and trend analysis. Executing an extraction, validation or migration process using Variable Hierarchies (or hierarchies of Data Scope Templates) may show, for example, that whenever the claims development team modifies program code, the claims regression test fails, indicating that more rigorous testing is required of this team prior to the deployment of their changes to the system test environment. Such metrics are valuable to project managers in tracking the quality and progress of a data extraction, validation or migration development team.
15. Storing the results in a repository allows the extraction, validation or migration environment to be altered/rebuilt/replaced without loss of the metrics from prior extraction, validation or migration runs.
16. Storing historical Comparison Data permanently in a repository facilitates and simplifies the analysis of the impact on Comparison Data of altering the migration process.
17. The use of Comparison Data reduces the effort and cost of the data migration reconciliation and auditing process.

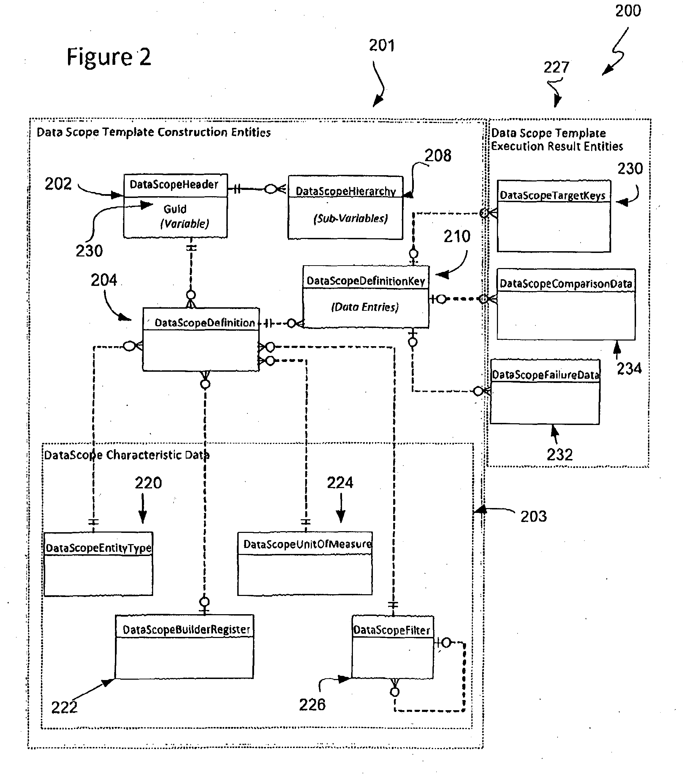

Figure 2 is an entity relationship diagram illustrating exemplary relational database tables that reside in Repository 110 for construction of Data Scope Template 102 (Data Scope Template construction entities 201) and the storage of results of the use of Data Scope Template 102 (Data Scope Template Execution Results 130) by computer processor 106 in a data migration. The information stored in data tables within Data Scope Template Construction Entities 201 is used to generate the XML which forms Data Scope Template 102. DataScopeHeader 202 is the root level entity. Data Scope Template Execution Result Entities 227 stores the results of using Data Scope Template 102. This schema stores the variable assigned to a portion of the source data, keys representing source entries and target data entries, characteristic data, definition data, failure data, source values and target values.

The Data Scope Template Construction Entities 201 include DataScopeHeader 202, DataScopeDefinition 204 and DataScopeHierarchy 208.

DataScopeHeader 202 is uniquely identified by GUID 230 (globally unique identifier). DataScopeHeader 202 contains a variable that is assigned to a portion of the source data.

Data Scope Characteristic Data 203 contains interpretable (characteristic) data that is used to identify source data entries within the Source Data Store.

A row of data stored in DataScopeHeader 202 can optionally have zero, one or more related data rows stored in DataScopeDefinition 204. DataScopeDefinition 204 provides the storage location for users to specify the data range of a particular Data Scope Template.

When a row of data is added to DataScopeDefinition 204, the row may contain details to create a fixed definition in the form of definition data which defines data entries within the Source Data Store, or an interpretable definition in the form of characteristic data, which may be used to identify data entries within the Source Data Store.

A fixed definition stored in DataScopeDefinition 204 contains a reference to an entry stored in DataEntityType 220 and provides a specific set of Source Data Keys (identifying source entries) which are stored in DataScopeDefinitionKey 210.

An interpretable definition (in the form of characteristic data) stored in DataScopeDefinition 204 contains a reference to an entry stored in DataScopeEntityType 220, DataScopeBuilderRegister 222, DataScopeUnitOfMeasure 224, and can optionally contain a reference to DataScopeFilter 226. When characteristic data is first processed, the definition is resolved into a specific set of Source Data Keys (representing source entries) which can then be stored in DataScopeDefinitionKey 210. Subsequent use of the DataScopeDefinition 204 results in the previously resolved Source Data Keys taking precedence over the interpretable definition instructions (that is to say, the list of source entries generated on first use will be used rather than reinterpreting the characteristic data).

DataScopeEntityType 220 stores a set of data entity names relating to the primary data entities in Source Data Store 104, and provides the mechanism for easily adapting a migration process to the specifics of different industries. For example, in the general insurance context, primary data entities would typically include "Parties", "Policies" and "Claims".

DataScopeBuilderRegister 222 stores a set of algorithm names identifying Data Scope Template resolution algorithms which are used to resolve DataScopeDefinition 204 into a list of Source Data Keys pertaining to the user-chosen DataScopeEntityType 220 during the execution of the migration process (that is, the algorithms which interpret characteristic data to generate a list of source entries). The creation of Data Scope Template resolution algorithms is typically a bespoke activity due to the high variability and industry specific nature of Source Data Store 104. Registering the Data Scope Template resolution algorithms in DataScopeBuilderRegister 222 allows non-technical users to easily select an appropriate data resolution algorithm, and allows the User Interface 112 to be easily reused in a variety of industries.

DataScopeUnitOfMeasure 224 stores a set of available measurement units that are applied to DataScopeDefinition 204. Typical units of measure are "Percent" and "Units", allowing the user to select a relative or absolute modifier for the value of units in DataScopeDefinition 204.

DataScopeFilter 226 stores a hierarchical set of filtering constraint names. These constraints typically relate to conceptual portions of data in Source Data Store 104. For example, for a particular insurance entity of "Policy", there may be "Motor" products and "Home and Contents" products, both of which can be added as DataScopeFilter 226 entries. Users can select filter constraints and these will be applied by the Data Scope Template resolution algorithms referred to in DataScopeBuilderRegister 222. These are a further form of characteristic data.

A row of data stored in DataScopeHeader 202 can optionally have zero, one or more related entries stored in DataScopeHierachy 208. DataScopeHierachy 208 allows users to store parent to child relationships between rows stored in DataScopeHeader 202. This allows the creation of hierarchies of variables, sub-variables, and further sub-variables.

The Data Scope Template Execution Result Entities 227 include DataScopeFailureData 232. Failure data is stored in DataScopeFailureData 232, linking the failure data to its related Source Data Key (ie. source entry, which is in turn related to a variable referring directly or indirectly to the Source Data Key) and making the failure data available for regression testing analysis. Comparison Data is stored in DataScopeComparisonData 234, making the Comparison Data available for regression testing analysis, audit and reconciliation.

The entity relationship diagram illustrated by Figure 2 illustrates a data storage design allowing several benefits of embodiments of the invention to be achieved. The ability to define characteristic data using data scope characteristic data 203 supports the efficient and accurate selection of portions of source data that meet user defined scenarios. The storage of definition data in the form of Source Data Keys (in DataScopeDefinitionKey 210) allows end users to specify source data entries that are known to have problems or are complex. It also allows resolved Data Scope Templates to use the same Source Data Keys when re-executed, facilitating a "like-to-like" comparison. The support for sub-variables via a hierarchical structure supported by DataScopeHierarchy 208 aids efficiency in testing, as variables and Data Scope Templates representing various data scenarios can be easily reused. The storage of Source Data Keys and the corresponding Target Data Keys (in DataScopeTargetKeys 230) representing target data entries allows users to easily compare data entries in the legacy (source) and target applications, enhancing efficiency in testing. The storage of Comparison Data in the form of source values and target values (in DataScopeComparisonData 234), supports simpler and more efficient audit and reconciliation processes. The support for failure data (DataScopeFailureData 232), allows more efficient defect identification. Finally, the association of DataScope Characteristic Data 203 with DataScopeComparisonData 234 and DataScopeFailureData 232 via DataScopeDefinition 204 and DataScopeDefinitionKey 210 facilitates the analysis of Comparison Result Data and failure data by category. This allows the efficient review by entity type and/or filter, providing data that facilitates the answering of questions such as "what proportion of (entity type) claims have failure data?" and "do motor or home policies have greater premium variances?".

Figure 3 is a table 300 illustrating various elements of exemplary Data Scope Template Construction Entities 201. Each row of the table represents a single Data Scope Template 102.

Data Scope Template 302, which assigns the variable "10% of policies", illustrates a definition defining a 10% selection of all policies. Data Scope Template 302 includes characteristic data as illustrated in Figure 3, which the computer processor 106 uses to select data entries (that is, Source Data Keys) within the Source Data Store (that is, Source Data Store 104). This portion of source data (being 10% of all policies) is assigned a variable, namely "10% of all policies", to enable this portion of the source data to be referred to using the variable by one or more computer processors 106 in an extraction process, including the generation of target data, and/or a generation of further target data from the source data (that is, in a second or subsequent migration run).

Data Scope Template 306, which assigns the variable "6 claims", similarly includes characteristic data defining the data characteristics of 6 open claims.

Data Scope Template 310, which assigns the variable "Combined policies (.005%) and claims (6)", illustrates an exemplary combination of characteristic data and a child Data Scope Template. This Data Scope Template 310 includes characteristic data (.005% of combined motor policies) in addition to a sub-variable, being "6 claims". This sub-variable was assigned by Data Scope Template 306, which identifies a second portion of the source data (being 6 claims). In this way variable "6 claims" is reused in the definition of the first portion of data associated with the "Combined policies (.005%), and claims (6)" variable, eliminating the need to separately specify the "6 claims" definition within Data Scope Template 310.

Data Scope Template 318, which assigns the variable "Regression Test 1", illustrates a Data Scope Template containing references to data that is solely defined by sub-variables. That is, Data Scope Template 318 assigns the variable "Regression Test 1" to definition data defining data entries within Source Data Store 104, where the definition data includes the sub-variables "10% of policies" and "6 claims" which are associated with "10% of policies" (assigned by Data Scope Template 302) and "6 claims" (assigned by Data Scope Template 306) respectively.

Data Scope Template 320, which assigns the variable "Outstanding Claims", illustrates the use of an alternative Data Scope Template builder 114, and in this case the builder 114 would only select "open" (as distinct from "finalised") claims.

Data Scope Template 322, which assigns the variable "Motor Policies 20% + 3 defects", illustrates the use of multiple Data Scope Template definitions. The first definition (consisting of characteristic data) instructs the Data Scope Template builder 114 to restrict policy selection to 20% of policies which relate to motor vehicles. The second definition provides definition data in the form of a fixed list of 3 policy keys (representing source entries) which happen to have project defects recorded against them. These policy keys will have been inserted into the DataScopeDefinitionKey 210 table (as definition data) for direct use.

Data Scope Template 328, which assigns variable "Regression Test 2", illustrates a composite Data Scope Template containing both a Data Scope Definition (25 Home Insurance policies - defined by characteristic data) and a list sub-variables. The inclusion of the "Regression Test 1" variable as a sub-variable of the "Regression Test 2" variable illustrates the ability to create multiple level Variable Hierarchies. In this context, the variable "Regression Test 1" is a sub-variable of "Regression Test 2", and "10% of all policies" and "6 claims" are both further sub-variables of "Regression Test 2".

Data Scope Template 330, which assigns variable "2 specified glass policies", includes a list of defined entries (definition data) selected to represent glass policies.

A benefit of variables as illustrated in Figure 3 is that they allow the easy and reliable selection of data that is of interest to an individual or a group. Whether selecting data on the basis of its characteristics (eg. motor vehicle policies) or definition data representing source entries (eg. a list of insurance policies with known defects), this embodiment of the present invention allows the easy selection of required data, associates that data with a variable for ease of identification and reuse, and excludes data that is not required (and so might cause distraction). The use of a structured variable naming convention would further improve human understanding of the purpose of each variable. A further benefit is that variables within hierarchies may be reused, which is especially important in the context of regression testing.

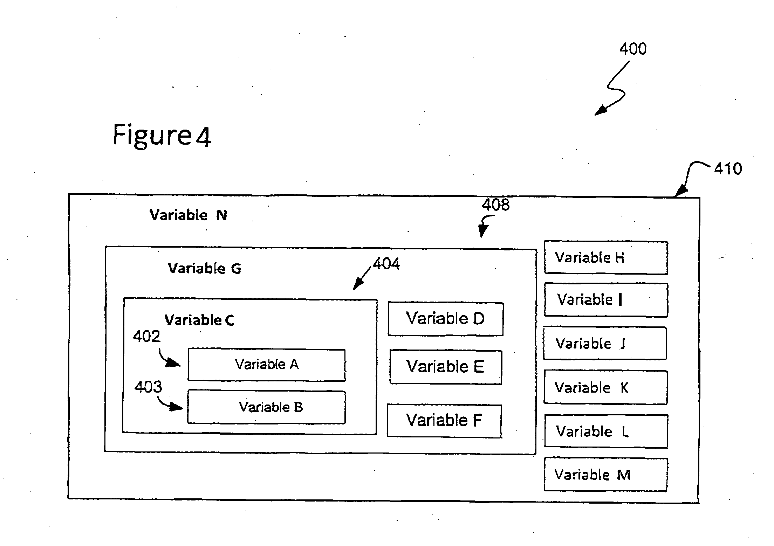

Figure 4 is a block diagram illustrating the composition of variables into a Variable Hierarchy 400. It shows a hierarchy of variables, sub-variables and further sub-variables. Each of the variables is assigned to a first portion of the source data by a Data Scope Template. Variable hierarchies can be built up over time allowing users who are concerned with development and testing to create and execute increasingly comprehensive test cases.

After a user creates (or assigns) Variable A 402 it can be used in isolation and have the results of its use (including, for example, Comparison Data and failure data, and possibly Target Data Keys) recorded against it in Data Scope Template Execution Results for regression testing analysis. After a user creates or assigns Variable B 403, it can also be used in isolation and have the results of its use recorded against it in Data Scope Template Execution Results for regression testing analysis.

After a user creates a Data Scope Template which assigns Variable C 404 and makes a parent to child relationship from it to Data Scope Templates which assign Variable A 402 and Variable B 403 respectively (making Variable A 402 and Variable B 403 sub-variables of Variable C 404), the processing by computer processor 106 of the Data Scope Template which assigns Variable C 404 will result in the use of all child Data Scope Templates (and therefore of the variables they respectively assign, being Variable A 402 and Variable B 403)

While a variable (eg: Variable A 402) can be used directly, or indirectly via a Variable Hierarchy (eg: via Variable C 404), there is no difference in the recording of results in repository 110. In each case the results are recorded against the variable in Data Scope Template Execution Results 130, and may be used in subsequent extractions or migrations, or regression testing analysis.

User created Variable Hierarchies can model a wide range of test scenarios. For example, Variable G 408 has 4 direct sub-variables (Variables C-F), and when the Data Scope Template by which it is assigned is processed, it will result in the processing of the Data Scope Templates assigning all sub-variables and further sub-variables, including Variable A 402 and Variable B 403. Variable N 410 exemplifies a further hierarchical composition.

The use of hierarchies of sub-variables and further sub-variables as illustrated within Figure 4 provides a number of advantages. Firstly, it aids regression testing. For example, it allows a project manager to insist that developers always include regression test variables or Data Scope Templates when testing new software, and do not promote the software from their development environments to the system test environment until the regression test has been passed. Secondly, it allows numerous Data Scope Templates representing the interests of different groups to be executed in a single test run. This is important where resources (e.g. computer processors) are limited, and it may only be possible to execute test migrations at night. A key benefit is reuse; the design of test scenarios (represented by selected portions of source data) that thoroughly test migration logic can be a complex and time consuming activity. The ability to add existing variables as children of other variables allows the reuse of existing scenarios.

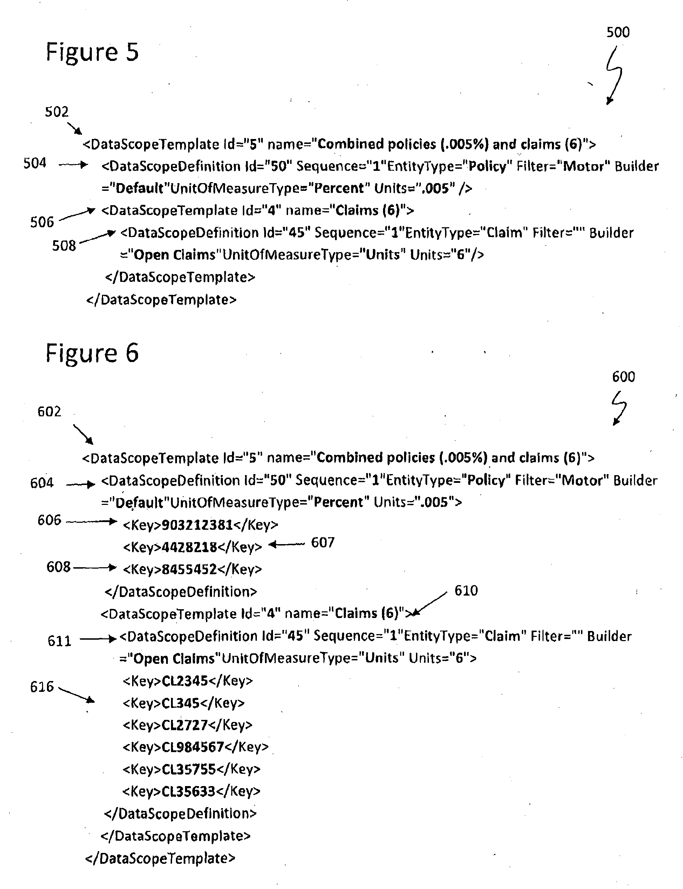

Figure 5 illustrates an exemplary XML structure 500 of an unresolved hierarchical Data Scope Template corresponding to Data Scope Template 310, which assigns the variable "Combined policies (.005%) and claims (6)" (see Figure 3). In other words, it illustrates the use of characteristic data to select data entries within a Source Data Store, and associating that characteristic data with a variable. XML structure 500 contains root <DataScopeTemplate> tag 502. This tag assigns the variable (labelled as a "name") "Combined policies (.005%) and claims (6)" to the data identified in the remainder of the XML structure 500. <DataScopeTemplate> tag 502 has its own <DataScopeDefinition> tag 504, which is characteristic data defining data characteristics (namely .005% of motor vehicle policies). Root <DataScopeTemplate> tag 502 is hierarchical because it contains child <DataScopeTemplate> tag 506 (assigning sub-variable "Claims (6)"), which also has its own <DataScopeDefinition> tag 508 (identifying by means of characteristic data the portion of the source data associated with the sub-variable). The DataScopeTemplate is considered unresolved as it contains the parameters (i.e. characteristic data) to resolve the Data Scope Template (i.e..005% of motor policies in <DataScopeDefinition> tag 504 and 6 unspecified open claims in <DataScopeDefinition> tag 508), and the <DataScopeDefinition> tags are yet to contain any <Key> tags which store specific Source Data Keys (representing source entries).

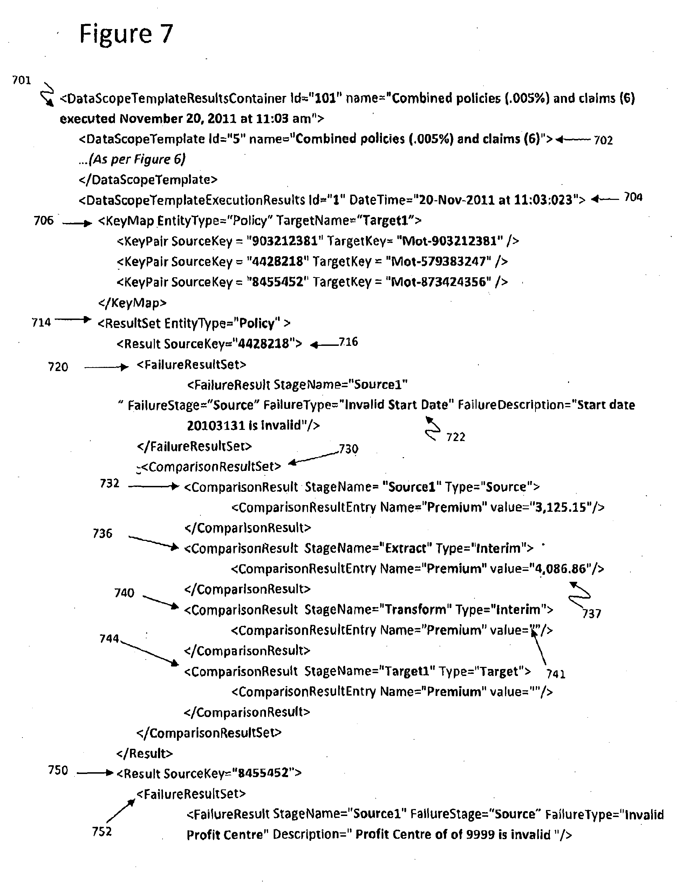

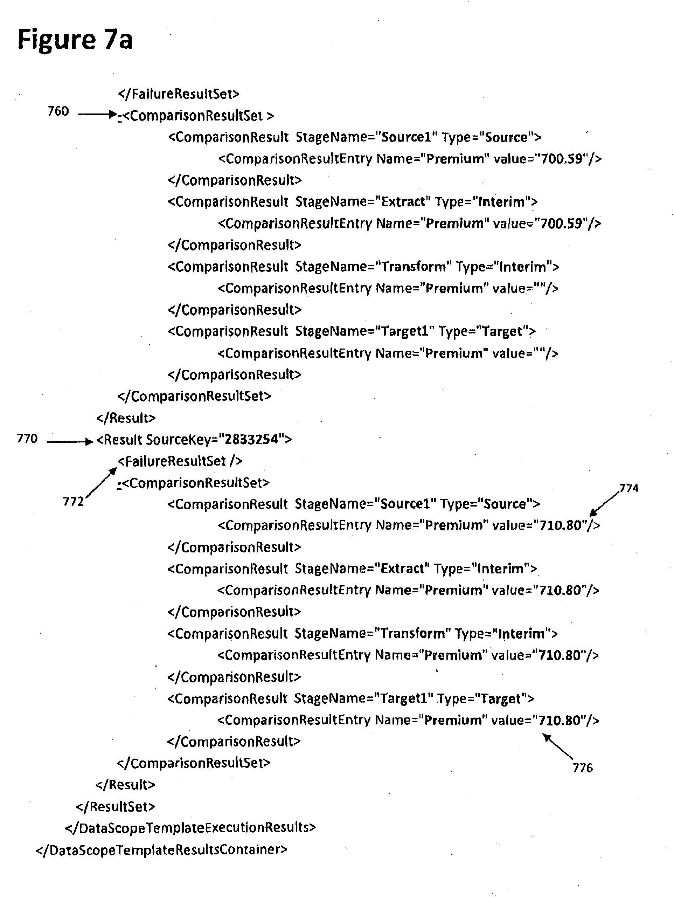

The use of XML to store and transport data, as illustrated in Figure 5 (and later in Figures 6 and 7) provides the data with strongly typed data structures, human readability, and flexible data transport methods (i.e. the transport methods are not restricted to database communication protocols). The use of XML also allows Data Scope Templates to be stored as reference documents in version management systems or even technical specifications. The XML structure is simple to interpret, so it is easy to write Data Scope Builders 114 to navigate and read the XML structure. A data compression XML envelope which compresses the DataScopeTemplate and DataScopeTemplateResultsContainer can be easily added if desired.

Figure 6 illustrates an exemplary XML structure 600 of a resolved hierarchical Data Scope Template, corresponding to Data Scope Template 310 assigning the variable "Combined policies (.005%) and claims (6)" (see Figure 3). In other words, it illustrates a list of source entries generated from characteristic data to select data entries within a Source Data Store, wherein each source entry corresponds to a data entry within the Source Data Store, and is associated with a variable. It is the same example used in Figure 5, but is resolved. The Data Scope Template is resolved because the Data Scope Template resolution process has been completed (that is, the computer processor 106 has invoked Data Scope Builders 114 to use the characteristic data to identify data entries (Source Data Keys) within the Source Data Store) for each <DataScopeDefinition> tag as evidenced by the <Key> tags (606, 607, 608, 616) containing a list of source entries. XML structure 600 contains a root <DataScopeTemplate> tag 602 and a child <DataScopeTemplate> tag 610. The <DataScopeDefinition> tags 604 and 611 have had Data Scope Template resolution algorithms applied to them that resolved characteristic data into specific Source Data Keys (representing source entries). In <DataScopeDefinition> tag 604, ".005% of motor policies" were determined to be 3 policies listed as <Key> tag(s) (606, 607 and 608). The EntityType="Policy" attribute of <DataScopeDefinition> tag 604 identifies the contained <Key> tags as being "Policy keys". Similarly, the resolved Source Data Keys of <DataScopeDefinition> tag 611 returned 6 open claims listed in <Key> tags 616.

In this example, the Source Data Keys have been generated as lists of source entries from characteristic data by data scope builders 114; receiving definition data defining the data entries within the Source Data Store would have yielded the same result, but would have obviated the need for data scope builders 114.

Figures 7 and 7a together illustrate an exemplary XML structure of an executed Data Scope Template represented by a Data Scope Template Results Container. The XML structure spans Figures 7 and 7a. It consists of a resolved hierarchical Data Scope Template and extraction/validation/migration results. It includes Target Data Keys, Comparison Data (representing Comparison Values associated with a Comparison Name at various stages of the migration process) and failure data, and corresponds to Data Scope Template 310 assigning the variable "Combined policies (.005%) and claims (6)" (see Figure 3). It illustrates failure data representing migration failures, source data entries associated with source values and target data entries associated with target values, where the failure data, source values and target values are associated with variables which correspond to source entries. It also illustrates associating target entries to the variable with which the corresponding source data entry is associated. It is the same example used in Figure 6, but it includes results.

The top level tag is <DataScopeTemplateResultsContainer> 701. At the next level there is <DataScopeTemplate> 702 (as in Figure 6) and <DataScopeTemplateExecutionResults> 704. <DataScopeTemplateExecutionResults> consists of two key elements; <KeyMap> 706 which links the Target Data Keys to Source Data Keys (associating target data entries with source entries) and <ResultSet> 714. <ResultSet> 714 contains failure data and Comparison Data (representing Comparison Values associated with a Comparison Name at various stages of the migration process) for each "Policy" Source Data Key. <Result> tag 716 relates to Source Data Key 4428218, <Result> tag 750 relates to Source Data Key 8855452 and <Result> tag 770 (Figure 7a) relates to Source Data Key 2833254. The <Result> 716 consists of <FailureResultSet> 720 which shows the failure data for a particular Source Data Key, and <ComparisonResultSet> 730 which shows the Comparison Data for a particular Source Data Key. This Comparison Data illustrates source values and target values (Comparison Values) corresponding to the Comparison Name "premium". The source and target values may represent financial values associated with a financial account relating to insurance premiums.

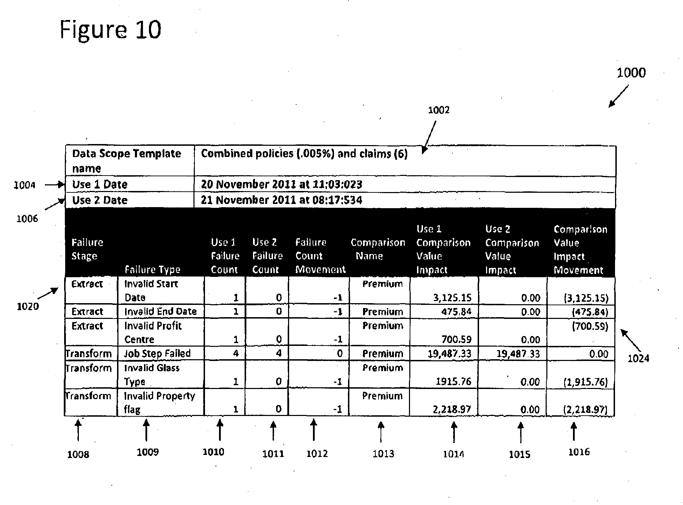

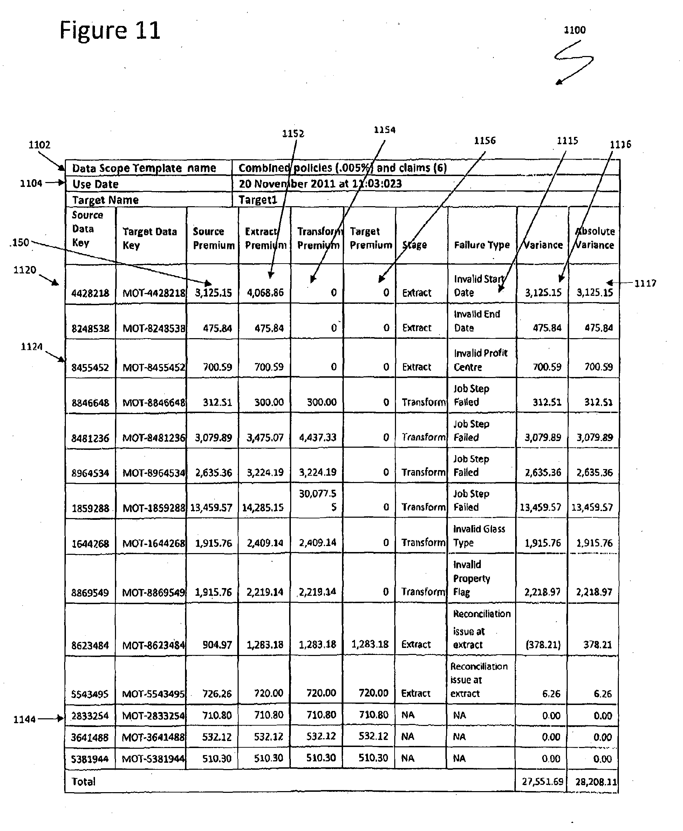

The <FailureResultSet> 720 and <ComparisonResultSet> 730 for Source Data Key 4428218 under <Result> tag 716 illustrate useful data that is stored in the <DataScopeTemplateExecutionResults> 704. The subsequent use of this data is illustrated in the regression analysis report of Figure 10 (row 1020) and the reconciliation report of Figure 11 (row 1120).

<FailureResultSet> 720 shows a FailureType of "Invalid Start Date" (722). It illustrates the generation of failure data representing a migration failure (caused by an invalid start date) and the association of the failure data with the "Combined policies (.005%) and claims (6)" variable referred to in <DataScopeTemplate> tag 702.

<ComparisonResultSet> 730 contains four <ComparisonResult> entries, labelled 732, 736, 740 and 744. <ComparisonResult> 732 contains a "Source" insurance premium financial value of $3,125.15 (also shown in Figure 11 reference 1150), illustrating a source value within a Source Data Store (StageName = "Source1"). <ComparisonResult> 736 contains a "Extract" insurance premium value $4,068.86 (ref. 737) (also shown in Figure 11 reference 1152), illustrating a target value within an (interim) Target Data Store (StageName = "Extract"). <ComparisonResult> 740 contains a zero "Transform" insurance premium value (ref. 741) (also shown in Figure 11 reference 1154), illustrating a target value within a target Data Store (StageName = "Transform"). <ComparisonResult> 744 contains a zero "Target" insurance premium (also shown in Figure 11 reference 1156), illustrating a target value within a target Data Store (StageName = "Target1"). "Extract" insurance premium value 737 and "Transform" insurance premium value 741 are examples of interim target premium values. Comparing the insurance premium values for each of the <ComparisonResults> generates Comparison Result Data.

The <FailureResultSet> 752 and <ComparisonResultSet> 760 for Source Data Key 8455452 under <Result> tag 750 illustrate useful data that is stored by the <DataScopeTemplateExecutionResults> 704. The use of this data is subsequently illustrated in the regression analysis report of Figure 10 (row 1024) and reconciliation report of Figure 11 (row 1124). It is a further illustration of the generation of failure data representing a migration failure, a source value within a Source Data Store, a target value within a Target Data Store and the association of each of the failure data, source value and target value with the variable.

<Result> tag 770 for Source Data Key 2883254 is further illustrated in the reconciliation report of Figure 11 (row 1144). It is an illustration of a successful migration of a source value within a Source Data Store to a target value within a Target Data Store and the association of the target data with the variable. It is successful as it does not contain any failure data against the <FailureResultSet> tag 772, and the <ComparisonResults> for the insurance premium values are identical from the Source Data Store of 710.80 (774) to the Target Data Store of 710.80 (776).

The data structure illustrated in Figures 7 and 7a offers several benefits. Firstly, it stores information on failures and source values and target values, highlighting when and how the failure data and Comparison Result Data were generated; this simplifies the process of "debugging" extraction transformation and/or migration software. Another benefit of the use of an XML format is that it allows flexibility in the data transportation mechanism and loading of the <DataScopeTemplateResultsContainer> 701 into a data repository 110. For example the data repository 110 and computer processor 106 can be installed in separate computer networks and a network bridge (e.g via File Transport Protocol (FTP)) can be implemented to facilitate reading from and writing to the repository 110. A further benefit in storing migration result data in a form that associates it with the Source Data Keys and Target Data Keys is that that it aids regression testing and reconciliation (as subsequently illustrated in figures 10 and 11). The regression testing and reconciliation reporting capabilities are further enhanced when the <DataScopeTemplateResultsContainer> 701 data is stored in a relational database structure as illustrated by the entity relationship diagram of Figure 2. A still further benefit of storing <DataScopeTemplateResultsContainer> 701 data is that it provides objective evidence that a Data Scope Template has been processed. This is very useful for project managers when checking that testing protocols have been observed.

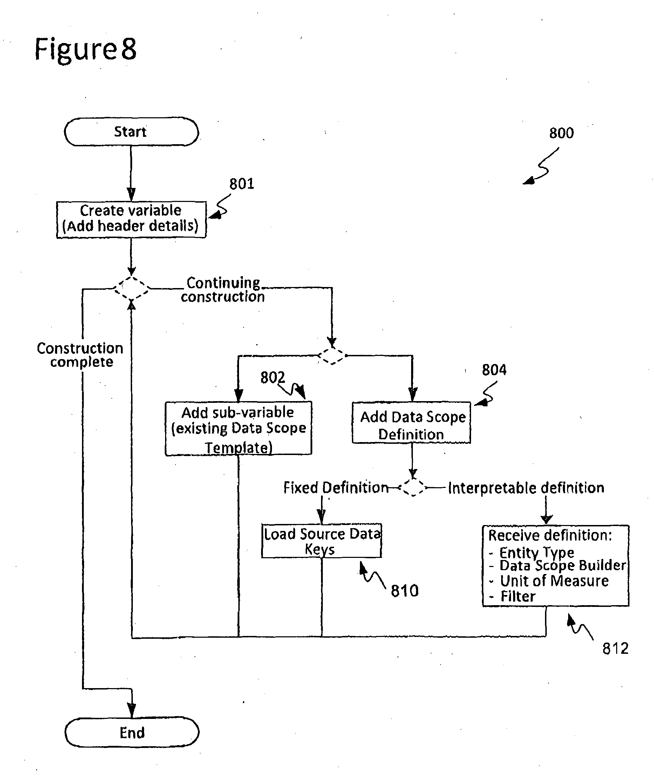

Figure 8 is a process diagram illustrating Data Scope Template construction process 800. It illustrates the process of associating portions of source data with a variable by receiving definition data, receiving characteristic data, and optionally generating a hierarchy of sub-variables.

At step 801 the variable is created and header details are added to the Data Scope Template (step 801). A hierarchy of sub-variables may be added (step 802) to create a hierarchical link between one or more existing variables and the new one created at step 801.

At step 804, Data Scope Definitions may be added to the Template to enable the identification of the data items to be included. The Data Scope Definition may be a fixed definition in the form of definition data defining data entries within a Source Data Store such as Source Data Store 104, or may be an interpretable definition in the form of characteristic data defining data characteristics which may be used to identify data entries within the Source Data Store.

If the Data Scope Definition includes definition data, a Data Scope Entity is selected, and a specific set of Source Data Keys (representing source entries) is loaded on instruction from an operator (step 810). In this way, the Data Scope Definition of the Data Scope Template may be manually resolved. Comparing the "Load Source Data Keys" step 810 to the exemplary resolved hierarchical Data Scope Template 600 of Figure 6, if <DataScopeDefinition> tag 604 were created as a fixed definition, the <Keys> tag(s) (606, 607 and 608) would be loaded on explicit instruction from an operator. In other words, the <Keys> tag(s) (606, 607 and 608) would look the same, whether created from characteristic data or definition data.

If the Data Scope Definition includes characteristic data, the computer processor 106 receives the characteristic data necessary for computer processor 106 to resolve the Data Scope Template (step 812). The Data Scope Characteristics provided as part of step 812 may include: entity type (eg. "Policy", "Claim"); Data Scope Template builder identification to determine the algorithm to be used in resolving the Data Scope Definition; unit of measure (eg."units" or "percent"); number of units; and a filter (eg."Motor policies only" or "All").

Figure 8 illustrates the simplicity and efficiency of the Data Scope Template construction process. Having a simple process for the creation of variables and association of Source Data Keys, characteristic data and even other variables (hence re-using prior Data Scope Template construction effort), allows both technical and non-technical staff to use the system.

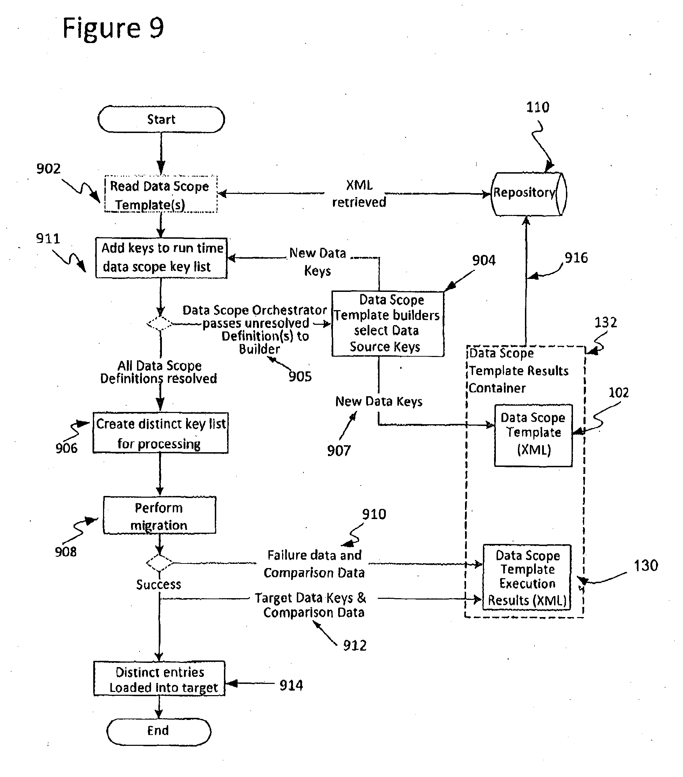

Figure 9 is a diagram illustrating Source Data Key resolution and data migration processes. It illustrates the generation of a list of source entries, the generation of failure data, source values and target values, and the association of failure data, source values, target values and target data entries with a variable and the corresponding source entries.

Upon initiation, the migration process reads Data Scope Template 102 from the repository 110, retrieving definition data defining data entries (Source Data Keys) and characteristic data defining data characteristics (step 902). The Source Data Keys are loaded into a "run time data scope key list" at step 911. As described above, the run time data scope key list generated at step 911 comprises a set of source entries (Source Data Keys), wherein each source entry corresponds to a data entry within the source data store, and is associated with one or more variables, sub-variables or further sub-variables.

At step 905, a Data Scope Orchestrator program reads the characteristic data for each Data Scope Definition and allocates the interpretation (or resolution) work to the defined Data Scope Template builder program 114. As explained above, Data Scope Template Builders 114 are custom built programs designed to resolve characteristic data to specific Source Data Keys from a particular source system. The Data Scope Template Builder 114 then reads the instructions of the DataScopeDefinition 204 and selects a set of Source Data Keys (representing source entries) for the nominated DataScopeEntityType 220 in accordance with the instructions (ie. characteristic data) of the DataScopeCharacteristicData 203 (step 904). The Source Data Keys are added to the run time data scope key list at step 911 and added to the Data Scope Template 102 (at step 907).

The process continues for each Data Scope Builder 114 referenced by a Data Scope Definition in the Data Scope Template 102 (and any child Data Scope Templates).

Once all Data Scope Definitions have been resolved and loaded into the run time data scope key list, a distinct set of Source Data Keys is created from the run time data scope key list (step 906) by removing duplicate Source Data Keys. This distinct list represents the source entries to be migrated by computer processor 106.

In the event that a specific Source Data Key appears in more than one Data Scope Definition within a Data Scope Template, when the migration which refers to the Data Scope Template is executed by computer processor 106, that Source Data Key will only be processed once. However, the Source Data Key is associated with each Data Scope Definition within which it appears, as is any target data, failure data and Comparison Data associated with the Source Data Key.

Computer processor 106 migrates the portion of source data identified by the distinct set of Source Data Keys (step 908).

If a migration failure generates failure data during the migration process, the failure data and any Comparison Data (representing Comparison Values associated with a Comparison Name at various stages of the migration process) for the failed data entries are recorded in Data Scope Template Execution Results 130 (step 910), and are associated with the variable assigned to the Data Scope Templates with which their corresponding Source Data Keys (representing source data entries) are associated.

If data is successfully migrated (that is, if target data entries are successfully generated from each of the data entries in the Source Data Store identified by the Source Data Keys), the target data entries are loaded into the Target Data Store (eg. the Target Data Store 108) (step 914).

The Target Data Keys and any Comparison Data for the migration run are recorded in Data Scope Template Execution Results 130 (step 912) and associated with the variable assigned by the Data Scope Templates with which their corresponding Source Data Keys (source entries) are associated.

At the conclusion of the migration process, Data Scope Template Results Container 132, including Data Scope Template 102 and Data Scope Template Execution Results 130 are stored in repository 110 (step 916).

To illustrate the process in Figure 9, consider the XML structures in Figures 5, 6, 7 and 7a. If the Data Scope Template in Figure 5 were being processed, it would be passed as unresolved definitions (characteristic data) to the Data Scope Builders 114 (steps 904 and 905). This would generate the lists of source entries (keys 606, 607, 608 and 616) and write them into the Data Scope Template 102 (as illustrated in Figure 6). In subsequent or repeat processing, the Data Scope Template definition would already be resolved so once the Data Scope Template is read at step 902, the Source Data Keys would be immediately added to the runtime data scope key list (step 911), and the process would then proceed directly to creating a distinct set of Source Data Keys (step 906). The Data Scope Template Execution Results (illustrated by <DataScopeTemplateExecutionResults> 704) would be stored as <KeyMap> 706 (linking Target Data Keys to Source Data Keys, including associating the one or more respective target data entries with the one or more variables, sub-variables or further sub-variables to which the corresponding source entry is associated), <FailureResultSet> 720 (that is, failure data, associated with the one or more variables, sub-variables or further sub-variables to which the corresponding source entry is associated) and <ComparisonResultSet> 730 (Comparison Data, consisting of source values and target values).

The process illustrated by Figure 9 has several advantages. It accurately selects data for processing based on characteristic data and definition data. It processes each source entry once, regardless of how many Data Scope Templates within a hierarchy contain it, aiding processing efficiency. It records Target Data Keys, providing a link between source and target systems. Furthermore, it records Comparison Data that can be used for reporting purposes and data (metrics) analysis as is subsequently illustrated in Figure 10 and Figure 11.

Figure 10 is a table 1000 illustrating the use of Comparison Result Data in a regression analysis report. It illustrates the use and usefulness of failure data and source values, and the comparison of source data from two migration runs. The report compares summarised failure data resulting from two uses (on 20-Nov-2011 (1004) and 21-Nov-2011 (1006)) of the variable "Combined policies (.005%) and claims (6)" (labelled 1002) in a migration. The report presents the financial impact of the failure data by showing the summarised Comparison Data and Comparison Result Data for each failure. In this instance the source value relates to insurance premium source values.

It highlights the use of failure data to show where (as indicated by "Stage" 1008) and why (as indicated by "Failure Type" 1009) failures occurred in the migration process. The information illustrated in Figure 10 has several benefits. Firstly, it can be used to prioritise the order in which errors are to be addressed (eg. address first those with the greatest materiality (impact on aggregated source values "Use 2 Comparison Value Impact" 1013) or highest count ("Use 2 Failure Count" 1011)). Secondly, the Stage 1008 at which the failure occurred indicates project progress. For example, if all failures were in the "Load" stage, this would suggest that the "Extract" and "Transform" stages had been executed. However, if all failures were in the "Extract" stage, then the project manager would not be able to assess the robustness of the "Transform" and "Load" stages. Thirdly, it shows the impact of changes to migration software, indicating whether the team responsible is improving the software. For example, row 1020 shows an improvement, as the Failure Count movement 1012 reflects a reduction in the failure count from Use 1 (1010) to Use 2 (ie. from 1 error to zero). Zero errors is typically the desired result, so this report illustrates an improvement from Use 1 1014 to Use 2 1015. "Comparison Value Impact Movement" 1016 of (3,125.15) reflects a reduction from Use 1 1014 to Use 2 1015 (ie. from a variance of 3,125.15 to a variance of zero). Zero variance is typically the desired result so this report illustrates an improvement from Use 1 1014 to Use 2 1015. The underlying data for "Use 1" values in row 1020 is illustrated in Figure 7, under <Result> tag 716. Similarly, the underlying data for "Use 1" values in row 1024 is illustrated in Figure 7, under <Result> tag 750.

Figure 11 is a table 1100 illustrating a detailed reconciliation report of source data to target data based on Comparison Result Data for the "Premium" Comparison Name. It illustrates the comparison of target values to source values to generate Comparison Result Data, the use of failure data, and the association of target data entries to the variable to which the corresponding source entry is associated. The report presents the results of using the variable "Combined policies (.005%) and claims (6)" 1102 on November 20 2011 (1104) in a migration to target application "Target1" (1106). It associates the source and target values to the variable and source and target data entries, and compares the source and target values producing Comparison Result Data. Furthermore it uses failure data to help explain the Comparison Result Data.

For example, row 1120 shows that Source Data Key 1108 had a source premium 1150 of 3,125.15 and an extract premium 1152 of 4,068.86, indicating that a variance was introduced during the extraction process. It has no Transform Premium 1154 or Target Premium 1156, due to a failure in the extracted data. That failure was due to an "Invalid Start Date" (1115). The impact of that failure variance 1116 and absolute variance 1117 (reflecting Comparison Result Data) is the difference between the Source Premium 1150 and Target Premium 1156. The underlying data in row 1120 is illustrated in Figure 7, under <Result> tag 716. A further example is shown on row 1144. It shows that Source Policy 2833254 has completely reconciled. Source, Extract, Transform and Target Premiums are all equal, and the Variance and Absolute Variance are zero. The underlying data in row 1144 is illustrated in Figure 7, under <Result> tag 750.

Whilst this example illustrates the loading a single Target Data Store, it could also be used to report on variances on two Target Data Stores loaded simultaneously. For example, it could report on the results of simultaneously loading Target Data Stores associated with an application for processing insurance policies, and a data warehouse.

This report has several benefits. It reduces the effort and cost of reconciliation by showing the Stage 1114, Failure Type 1115 and financial materiality 1116 and 1117 of variances, thus simplifying analysis. It reduces the effort and cost of the data migration audit process by presenting Comparison Result Data in a clearly explained, granular format.

Many modifications will be apparent to those skilled in the art without departing from the scope of the present invention.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

## Claims

1. A method of generating target data from source data, the method being executed by one or more computer processors and including the steps of:
receiving data entries within a source data store, wherein one or more source data entries is associated with a source value;
generating a first target data entry from each of the one or more source data entries, wherein each of the respective first target data entries is associated with a respective first target value;
generating a second target data entry from each of the one or more source data entries, wherein each of the respective second target data entries is associated with a respective second target value;
comparing each of the respective first target values and second target values to generate comparison result data.

2. A method as claimed in claim 1 wherein the step of comparing each of the respective first target values and second target values includes the step of comparing each of the respective first target values and second target values with a respective source value.

3. A method as claimed in any one of the preceding claims, further comprising the steps of, for each respective source data entry, first target data entry and second target data entry:
assigning a label to the source data entry, first target data entry and second target data entry; and
assigning the same label to the comparison result data generated from the first target value and second target value, to associate the generated comparison result data with source data entry, first target data entry and second target data entry.

4. A method as claimed in any one of the preceding claims, wherein the step of generating a first target data entry includes the step of generating at least a first interim target value, and the step of generating a second target data entry includes the step of generating at least a second interim target value.

5. A method as claimed in any one of the preceding claims, wherein the source value, first target value and second target value correspond to a financial value.

6. A method as claimed in claim 5, wherein each of the source values and target values corresponds to one of:
the quantum of an outstanding claim; or
an insurance premium.

7. A computer-readable medium storing computer-executable instructions which, when executed by a computer processor, execute a method as claimed in any one of the preceding claims.

8. A system for generating comparison result from a first target data entry and a second target data entry, each generated from a source data entry, the system including:
a source data store storing a source data entry associated with a source value, the source data store being accessible to one or more computer processors;
a target data store storing a first target value generated from the source value, the target data store also being accessible to the one or more computer processors;
a second target data store storing a second target value generated from the source value, the second target data store also being accessible to the one or more computer processors;
wherein the one or more computer processors are configured to generate comparison data by:
retrieving the source data entry from the source data store;
retrieving the first target data entry from the first target data store;
retrieving the second target data entry from second target data store; and
comparing the first target value and the second target value.

9. A system as claimed in claim 8, wherein the processor is further configured to compare the first target value and the second target value with the source value.

10. A system as claimed in claim 8 or 9, wherein the processor is further configured to:
assign a label to each of the source data entry, the first target data entry and the second target data entry; and
assign the same label to the generated comparison result data to associate the generated comparison result data with the source data entry, the first target data entry and the second target data entry.
